# EUROPEAN PATENT APPLICATION

(11) **EP 0 776 965 A2**
(43) Date of publication of application: **04.06.1997**
(21) Application number: 96203301.5
(22) Date of filing: 25.11.1996
(51) Int. Cl.: C11D 3/37, C11D 17/00, C08L 67/02

(54) **Polymer compositions**

(30) Priority: 30.11.1995 EP 95308630; 30.11.1995 EP 95308628; 30.11.1995 EP 95308629
(71) Applicant: UNILEVER N.V., NL-3000 DK Rotterdam (NL); UNILEVER PLC, London EC4P 4BQ (GB)
(72) Inventor: Blokzijl, Wilfried, Unilever Res. Vlaardingen Lab., 3133 AT Vlaardingen (GB); Creeth, Andrew Martin, Bebington, Wirral, Merseyside L63 3JW (GB); Hull, Michael, Gwynedd LL55 4EX (GB); Green, Andrew David, Bebington, Wirral, Merseyside L63 3JW (GB); Falou, Mohamad Sami, Bebington, Wirral, Merseyside L63 3JW (GB)
(74) Representative: Joppe, Hermina L. P.

(57) **Abstract**

1. A liquid composition comprising a water-dispersable or water-soluble sulphonated polyester comprising:
   (i) an unsulphonated aromatic diacidic monomer (A),
   (ii) a sulphonated aromatic diacidic monomer (SA),
   (iii) optionally a hydroxylated aromatic or aliphatic diacidic monomer (HA), in an amount replacing up to 50 mole% of (A) and/or (SA),
   (iv) a polyol (P) selected from ethylene glycol, propylene glycol, isopropylene glycol, glycerol, 1,2,4-butanetriol and 1,2,3-butanetriol, and aligomers of these having from 1 to 8 monomer units,
      the polyester having a sulphur content within the range of from 0.5 to 10 wt%,
   and a liquid carrier comprising:
   a) surfactants at a level of 45% by weight of higher;
   b) a mixture of surfactant and water; or
   c) water at a level of higher than 5% by weight.

A method for the preparation of a liquid composition comprising a liquid carrier and the polyester wherein the polyester is mixed with the liquid carrier.

## Description

### Technical Field

The present invention relates to compositions, in particular detergent compositions, comprising soil release polyester and processes for preparing such compositions.

### Background & Prior Art

Use of soil-release polyesters is well documented in the patent literature.

EP 185,427 (P&G) discloses alkyl end-capped soil-release polymers. EP 241,984 (P&G) discloses branched hydrophillic end-capped soil-release polymers. EP 220,156 (P&G) discloses alkyl end-capped soil-release polymers. EP 272,033 (P&G) discloses soil-release polymers comprising an oxypropyleneoxy moiety. US 3,962,152 (P&G) describes soil-release polymers containing polyethyleneglycol units having low molecular weight, wherein the molar ratio of terephtalate to polyethyleneglycol is 1.33 to 1.54 and wherein the molecular weight is in the range of 25,000 to 55,000. It is indicated that these polymers may be incorporated in solid detergent compositions. EP 201,124 (P&G) discloses soil-release polymers that contain two polyethyleneglycol units between which 3 to 5 ethyleneterephtalate units are positioned and the examples further describe that the polymer mix is fractioned in ethanol to remove an ethanol-insoluble fraction, which method is also used in EP 199,403. EP 253,567 (P&G) discloses compositions comprising quaternary ammonium surfactant and soil-release polymers comprising a molar ratio of terephtalate to polyethyleneglycol of from 3:1 to 1.67:1. US 4,569,772 (Colgate) and US 4,571,303 (Colgate) describe that hydrolysis may occur under the influence of alkaline material. EP 576,777 (P&G) describe isotropic liquid detergent compositions that comprise particular soil-release polymers that are said to be physically stable upon storage, but which may still suffer from the homogeneously distributed soil-release polymers, having low soil-release effectivity in the wash, whilst requiring stabilising ingredients in order to keep the soil-release polymer stable in the liquid. EP 576,777 (P&G) describes the use of PVP to keep the soil-release polymer in solution. EP 401,123 (Colgate) discloses soil-release polymer containing isoterephtalate units which may be included in liquid detergent compositions. GB 2,172,608 (Colgate) and DE 34 11 941 (Colgate) describe the exclusion of ionisable salts from the compositions thereof in order to prevent destabilisation of the soil-release polymer.

Commercially available soil-release polymers include Permalose® (ex ICI), as has e.g. been described in BE 648,565, and which contains 40% by weight of the total polymer material of water-insoluble material, Repel-O-Tex® (ex Rhone Poulenc) which is a solution of soil-release polymer in which the ratio of terephtalate to polyethyeleneglycol is believed to be about 1.4, Sokalan 9798X® (ex BASF) and Zelcon® 6126 (ex Dupont).

It has been found that soil-release polymers tend to become less active upon storage, e.g. the polymer itself, or the polymer in a liquid or solid detergent composition.

In has further been found that temperature fluctuations during storage of detergents comprising soil-release polymers may lead to lower soil-release performance in the wash.

It has been found difficult to prepare physically and chemically stable compositions, for example, detergent compostions comprising soil-release polyesters. Further, such compositions may become inhomogeneous, e.g. ingredients may separate or solid particles may sediment or they may show high viscosity.

The number of interactions between the ingredients of liquid detergent compositions make it generally difficult to prepare liquid compositions which are chemically stable, especially upon storage. Even though components in solid compositions have a more or less fixed position, soil-release polymers may also be chemically unstable therein, e.g. as a consequence of contact with alkaline surfaces or moisture.

Further, in preparing liquid detergent compositions, there may be difficulties associated with the low levels of processing water present in the formulation, in particular in concentrated liquids. Therefore, it is often useful if ingredients can be homogeneously included in liquids in ways which do not require high amounts of water to be withdrawn from the starting process water.

Surprisingly, we have found that particular polyesters in particular compositions overcome one or more of the above identified problems, whilst providing excellent soil-release performance.

### Definition of the Invention

The present invention relates to liquid compositions, particularly detergent compositions, comprising a water-soluble or water-dispersable sulphonated polyester comprising:
(i) an unsulphonated aromatic diacidic monomer (A),
(ii) a sulphonated aromatic diacidic monomer (SA)
(iii) optionally a hydroxylated aromatic or aliphatic diacidic monomer (HA), in an amount replacing up to 50 mole% of (A) and/or (SA),
(iv) a polyol (P) selected from ethylene glycol, propylene glycol, isopropylene glycol, glycerol, 1,2,4-butanetriol and 1,2,3-butanetriol, and oligomers of these having from 1 to 8 monomer units,
   the polyester having a sulphur content within the range of from 0.5 to 10 wt%;
and a liquid carrier comprising:
a) surfactants at a level of 45% by weight or higher;
b) a mixture of surfactant and water; or
c) water at a level of higher than 5% by weight.

The present invention further relates to liquid detergent compositions comprising the polyester as described in the immediately preceding paragraph wherein the liquid detergent composition has a structure.

The present invention further relates to liquid detergent compositions comprising the polyester, as described hereinabove, wherein the liquid detergent composition has a pH of from 6 to 10.

The present invention further relates to a process of preparing a liquid composition comprising a liquid carrier and a water soluble or water dispersable sulphonated polyester according to the invention and to a liquid carrier wherein the polyester is mixed with the liquid carrier.

The invention is further directed to a process of preparing a liquid detergent composition comprising a water-soluble or water-dispersable sulphonated polyester according to the invention by mixing the polyester into a liquid carrier which is structured.

The present invention is further directed to a process for preparing a liquid composition comprising the water-soluble or water-dispersable sulphonated polyester of the invention by adding the polyester to a liquid with a pH of between 6 and 10.

### The polyesters

We have found that the polyester compositions according to one aspect of the invention show excellent soil-release activity. It has further been found possible to prepare compositions including liquid detergent compositions comprising the polyester, which compositions are stable upon storage and which can be used to provide excellent soil-release benefits even after storage. The polyester may be dissolved in, or may be present, in a dispersed state in the liquid composition.

The polyesters with which the invention is concerned are defined above. The polyesters and their preparation are disclosed and claimed in FR 2 720 399A and FR 2 720 400A, and International Application No. PCT/FR95/00658 filed on 19 May 1995 (Rhône-Poulenc).

Preferred polyesters have the following features:
- the unsulphonated diacidic monomer (A) is an aromatic dicarboxylic acid or an anhydride of a lower (C₁-C₄) alkyl diester thereof, selected from terephthalic acid, isophthalic acid, 2,6-naphthalene dicarboxylic acid, anhydrides and lower (C₁-C₄) alkyl diesters thereof;
- the sulphonated diacidic monomer (SA) is a sulphonated aromatic dicarboxylic acid, anhydride, or lower (C₁-C₄) alkyl diester thereof;
- the mole ratio (A):[(A) + (SA)] is within the range of from 60:100 to 95:100, preferably from 65:100 to 93:100;
- the mole ratio (SA):[(A) + (SA)] is within the range of from 5:100 to 40:100, preferably from 7:100 to 35:100;
- the hydroxylated monomer (HA), if present, is a hydroxylated aromatic dicarboxylic acid, or anhydride or lower (C₁-C₄) dialkyl ester thereof;
- the hydroxylated monomer (HA), if present, does not replace more than 30 mole% of (A) and/or (SA);
- the quantity of (P) is such that the ratio of OH functional groups of (P) to COOH functional groups (or equivalents) of (A) + (SA) + any (HA) is within the range of from 1.05:1 to 4:1, preferably from 1.1:1 to 3.5:1, and more preferably from 1.8:1 to 3:1;
- the polyester has a number average molecular weight of less than 20 000,
- the sulphur content is within the range of from 1.2 to 8 wt%;
- the hydroxyl group content is at least 0.2 OH equivalent per kg of polyester.

### The unsulphonated diacidic monomer (A)

As previously indicated, the monomer (A) preferably consists of at least one dicarboxylic acid or anhydride chosen from terephthalic, isophthalic and 2,6 naphthalenedicarboxylic acids or anhydrides or their diesters.

Preferably, monomer (A) is present in a quantity corresponding to a molar ratio (A)/[(A) + (SA)] within the range of from 95:100 to 60:100, preferably from 93:100 to 65:100.

The unsulphonated diacidic monomer (A) preferably consists of 50 to 100 mole%, more preferably 70 to 90 mole%, of terephthalic acid or anhydride or lower alkyl (methyl, ethyl, propyl, isopropyl, butyl) diester, and of 0 to 50 mole%, more preferably from 10 to 30 mole%, of isophthalic acid or anhydride and/or of 2,6-naphthalenedicarboxylic acid or anhydride or lower alkyl (methyl, ethyl, propyl, isopropyl, butyl) diester; the preferred diesters are methyl diesters.

In the unsulphonated diacidic monomer (A) there may additionally be present minor quantities of aromatic diacids other than those mentioned above, such as orthophthalic acid, anthracene, 1,8-naphthalene, 1,4-naphthalene and biphenyl dicarboxylic acids or aliphatic diacids such as adipic, glutaric, succinic, trimethyladipic, pimelic, azelaic, sebacic, suberic, itaconic and maleic acids, etc. in the form of acid, anhydride or lower (methyl, ethyl, propyl, isopropyl, butyl) diesters.

### The sulphonated diacidic monomer (SA)

Preferably, the sulphonated diacidic monomer (SA) consists of at least one sulphonated aromatic or sulphonated aliphatic dicarboxylic acid or anhydride or lower (C₁-C₄) alkyl diester. Aromatic dicarboxylic acids and their derivatives are preferred.

Preferably, monomer (SA) is present in a quantity corresponding to a molar ratio (SA)/[(A) + (SA)] within the range of from 5:100 to 40:100, more preferably from 7:100 to 35:100.

The sulphonated diacidic monomer (SA) has at least one sulphonic acid group, preferably in the form of an alkali metal (preferably sodium) sulphonate, and two acidic functional groups or acidic functional group equivalents (that is to say an anhydride functional group or two ester functional groups) attached to one or a number of aromatic rings, when aromatic dicarboxylic acids or anhydrides or their diesters are involved, or to the aliphatic chain when aliphatic dicarboxylic acids or anhydrides or their diesters are involved.

Suitable aromatic sulphonated diacidic monomers include sulphoisophthalic, sulphoterephthalic, sulpho-orthophthalic acids or anhydrides, 4-sulpho-2,7-naphthalene-dicarboxylic acids or anhydrides, sulpho 4,4'-bis (hydroxycarbonyl) diphenyl sulphones, sulphodiphenyldicarboxylic acids or anhydrides, sulpho 4,4'-bis(hydroxycarbonyl) diphenylmethanes, sulpho-5-phenoxyisophthalic acids or anhydrides or their lower (methyl, ethyl, propyl, isopropyl, butyl) diesters.

Suitable aliphatic sulphonated diacidic monomers (SA) include sulphosuccinic acids or anhydrides or their lower alkyl (methyl, ethyl, propyl, isopropyl, butyl) diesters.

The most preferred sulphonated diacidic monomer (SA) is sulphoisophthalic acid in acid, anhydride or diester (preferably dimethyl ester) form, very particularly dimethyl 5-sodiooxysulphonylisophthalate.

### The hydroxylated diacidic monomer (HA)

The hydroxylated diacidic monomer (HA), which is optionally present and can replace up to 50 mole%, preferably up to 30 mole%, of (A) and/or (SA), consists of least one hydroxylated aromatic or aliphatic dicarboxylic acid or anhydride or a lower (C1-C4) alkyl diester thereof.

The hydroxylated diacidic monomer (HA) has at least one hydroxyl group attached to one or a number of aromatic rings when it is an aromatic monomer or to the aliphatic chain when it is an aliphatic monomer. Aromatic monomers are preferred.

Suitable hydroxylated diacidic monomers (HA) include 5-hydroxyisophthalic, 4-hydroxyisophthalic, 4-hydroxyphthalic, 2-hydroxymethylsuccinic, hydroxymethylglutaric and hydroxyglutaric acids, in acid, anhydride or lower alkyl diester form.

### The polyol (P)

The polyol (P) may be a oligomer comprising up to 8 monomer units, preferably up to 6 and more preferably up to 4 monomer units, but is most preferably a monomer. The polyol is selected from ethylene glycol, propylene glycol, glycerol, 1,2,4-butanetriol, 1,2,3-butanetriol and combinations of these, and their lower (2 to 8, preferably 2 to 6, more preferably 2 to 4) oligomers.

Preferably, the polyol (P) is present in a quantity corresponding to a ratio of the number of OH functional groups of the polyol (P) to the number of COOH functional groups or functional group equivalents of the total diacidic monomer (A) + (SA) + (HA) within the range of from 1.05:1 to 4:1, preferably from 1.1:1 to 3.5:1 and more preferably from 1.8:1 to 3:1.

The preferred polyols (P) are ethylene glycol and glycerol, ethylene glycol being especially preferred.

Preferably, the sulphonated diacidic monomer (SA) consists of at least one sulphonated aromatic dicarboxylic acid or anhydride or of a mixture of sulphonated aromatic acids or anhydrides and of sulphonated aliphatic acids or anhydrides or their diesters when the polyol (P) does not contain any polyol other than a glycol or when the hydroxylated diacidic monomer (HA) is absent.

### Molecular weight

Preferably, the polyester used in accordance with the invention has a number average molecular weight not exceeding 20,000, and preferably not exceeding 15,000. The molecular weight may be much lower than these limits. Polyesters having molecular weights below 1000, for example, 500-1,000, have proved highly effective.

Number average molecular weight may be measured by gel permeation chromatography, for example, in dimethylacetamide containing 10⁻² N of LiBr, at 25°C, or in tetrahydrofuran. The results are expressed as polystyrene equivalents.

### Hydroxyl functional group content

Preferably, the hydroxyl functional group content of the polyester, expressed as OH equivalent/kg of polyester, is at least 0.2. The hydroxyl functional group content may be estimated from proton NMR, the measurement being carried out in dimethyl sulphoxide.

The elementary unit considered in the definition of the mole of monomer (A), (SA) or (HA) is the COOH functional group in the case of the diacids or the COOH functional group equivalent in the case of the anhydrides or of the diesters.

### Especially preferred polyesters

An especially preferred polyester is obtainable from the following monomers:
- terephthalic acid (A1) in lower alkyl (preferably methyl) diester form;
- optionally isophthalic acid (A2) in acid or anhydride form;
- optionally a hydroxylated terephthalic or isophthalic acid (HA) in acid or anhydride form;
- the mole ratio (A1):[(A1) + (A2)] or (A1): [A1 + HA)] or (A1): [(A1) + (A2) + (HA)] being within the range of from 50:100 to 100:100, preferably from 70:100 to 90:100;
- sulphoisophthalic acid (SA), preferably in lower alkyl, preferably methyl, diester form; and
- monoethylene glycol and/or glycerol (P).

Preferred polyesters in accordance with the invention, based on terephthalic acid, isophthalic acid, sulphoisophthalic acid and monoethylene glycol, may be described as having backbone units of the following formula: 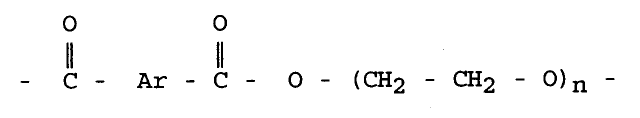 where Ar = terephthalic, isophthalic or sulphoisophthalic, and n represents 1, 2, 3 or 4. Typical mole percentages for the different values of n are as follows:

| | |
|---|---|
| n = 1 | 58.7 |
| n = 2 | 30.5 |
| n = 3 | 8.8 |
| n = 4 | 1.9, |

only trace quantities, if any, of polyethylene oxide units in which n is greater than four being present.

The majority of end groups are of the formula:

- Ar - COO - (CH₂ - CH₂ - O - )ₙ

wherein n is 1, 2, 3 or 4, with a minority being of the formulae:

- Ar - COOH or - Ar - COOR

wherein R is a lower alkyl group, preferably methyl.

These polyesters, unlike many disclosed in the prior art, are not end-capped with a hydrocarbon or with sulphonated capping groups.

### Preparation of the polyesters

The polyesters may be prepared by the usual esterification and/or transesterification and polycondensation processes, for example, by esterification and/or transesterification in the presence of a catalyst of the polyol (P) with the various diacidic monomers (in acid, anhydride or diester form), and polycondensation of the polyol esters at reduced pressure in the presence of a polycondensation catalyst.

A preferred process for the preparation of the polyesters is disclosed and claimed in FR 2 720 399A, FR 2 720 400A, and International Application No. PCT/FR95/00658 filed on 19 May 1995 (Rhône-Poulenc).

Preferably, the soil-release polyester is present in the compositions according to the invention at a level of at least 0.01% by weight of the composition, more preferably at least 0.1%, most preferably at least 1% and in particular at least 3%. The level of said soil-release polyester is preferably at most 40% by weight of the compositon, most preferably at most 30%, more preferably at most 20%.

In the structured liquid detergents or liquid detergents having a pH of between 6 and 10 according to the invention the level of said polyester is preferably at least 0.01% more preferably at least 0.1%, most preferably at least 0.2% by weight and preferably at most 10%, more preferably at most 5%, most preferably at most 3% by weight of the composition.

### Liquid Carrier

The compositions of the present invention comprise a liquid carrier. Preferably, the liquid carrier comprises surfactant and optionally water, e.g. at a level of from 5 to 95% by weight.

Preferably, the surfactant material is selected from anionic surfactants, nonionic surfactants, cationic surfactants and mixtures thereof. More preferably, the surfactant comprises nonionic surfactant material which may be selected from the nonionic material specified hereunder. The nonionic surfactant may additionally be mixed with anionic and/or cationic surfactants.

Preferably, the surfactant material is present at levels of from 5 to 100%, more preferably of from 25 to 100%, most preferably of from 45 to 100% by weight of the composition. A preferred embodiment of the invention is a liquid composition which comprises a liquid carrier consisting of 100% by weight of surfactant material.

Preferably, water is present at levels of from 5 to 100%, more preferably from 10 to 95% by weight of the composition.

The liquid carrier may optionally comprise hydrotrope material. Preferably, the hydrotrope material is selected from C1-4 monohydric alcohols, preferably selected from ethanol, propanol, isopropanol, butanol and mixtures thereof. Preferably, the hydrotrope material, where present, is present at levels of from 0%, preferably from 5 to 50% by weight of the composition.

As hydrotrope material may break up the structure of liquids, it is preferred only to use levels of hydrotrope material of lower than 10%, more preferably lower than 5%, most preferably lower than 3% by weight of the composition in structured liquid detergent compositions.

Preferably, the surfactant:water ratio is between 1:1 and 1:0. The most preferred liquid carrier combinations of nonionic and water comprise a nonionic:water ratio of 1:1 to 9:1, e.g. around 4:1. Preferably, the water:hydrotrope ratio is 1:0 to 1:1. Preferably, the surfactant:hydrotrope ratio is 1:0 to 2:1.

### Liquid Compositions

The liquid compositions may comprise water, surfactant material, hydrotrope, electrolyte and builder material, bleaches, enzymes, and antifoams as well as other ingredients typically hitherto incorporated into detergent compositions.

### Liquid Detergent Compositions

We have found that the soil-release polyester of the invention can be incorporated in liquid detergent compositions, including structured liquid detergent compositions wherein the aforementioned liquid carrier has a structure.

Liquid composition according to the invention with the particular polyester identified above, typically have a pH of from 6 to 10, preferably the pH of the liquid is at least 6.5, more preferably at least 7. Preferably the pH is at most 9.5, more preferably at most 9.

### Structured Liquids

We have found that structured liquid detergent compositions comprising the particular polyester composition show excellent soil-release activity and the liquids and soil release polymer remain stable over time.

Structured liquids can either be internally structured, whereby the structure is formed by primary ingredients (preferably surfactant material) and/or by providing a three dimensional matrix structure using secondary additives (preferably polymers, clay, silica and/or silicate material).

Some of the various kinds of liquids, that are internally structuring with surfactant material, are described in the reference H.A. Barnes, "Detergents", Ch.2. in K. Walters (Ed), "Rheometry: Industrial Applications", J. Wiley & Sons, Letchworth 1980. In general, the degree of ordering of such systems increases with increasing surfactant and/or electrolyte concentrations. Examples of structured liquids are given in US-A-4,244,840, EP-A-160 342, EP-A-38 101 and EP-A-140 452.

At very low concentrations of surfactant and/or electrolyte, the surfactant can exist as a molecular solution, or as a solution of spherical micelles. With the addition of further surfactant and/or electrolyte structures of surfactant material may form. Various forms of such structures exists, e.g. bi-layers. They are referred to by various terms such as rod-micelles, anisotropic surfactant phase, planar lamellar structures, lamellar droplets and liquid crystalline phases. Often different workers have used different terminology to refer to the structures which are really the same. For instance, in European patent specification EP-A-0,151,884, lamellar droplets are called spherulites.

A preferred form of lamellar structures are lamellar droplets of surfactant material in which the dispersed structuring phase is generally believed to consist of an onion-like configuration comprising concentric bilayers surfactant molecules, between which water is trapped, the aqueous phase. Liquids with a lamellar droplets structure are preferred as systems in which such droplets are close-packed provide a very desirable combination of physical stability and solid-suspending properties with useful flow properties, i.e. low viscosity with stability. Such liquids have for example been described in A. Jurgens, Microstructure and Viscosity of Liquid Detergent, Tenside Surfactants Detergent 26 (1989) 222 and J.C. van de Pas, Liquid Detergents, Tenside Surfactants Detergents 28 (1991) 158. The presence and identity of a surfactant structuring system in a liquid may be determined by means known to those skilled in the art for example, optical techniques, various rheometrical measurements, X-ray or neutron diffraction, and sometimes, electron microscopy. The most preferred structured liquids are liquid detergent compositions comprising lamellar droplets of surfactant material.

Without wishing to be bound by any theory, it is believed that the salting-out effect of electrolytes may add to the precipitation of the polyester material. The resulting polyester particles are thought not to be subject to hydrolysis during storage. Furthermore, it appears that, contrary to what would be believed, the precipitated soil-release polyester remains effective after dissolution during the wash. It is noted that soil-release polyesters can also be precipitated in other ways, e.g. by raising the temperature (preferably in the absence of water-insoluble polyesters) or by evaporating the reaction mixture after preparation of the polyester (preferably in the absence of water-insoluble polyester particles). It is further noted that it is not required for the polyester to precipitate, i.e. it may be present in a completely dissolved state in the structured liquid detergent composition.

If present as particles, then the weight average particle size of soil-release polyester particles in liquids is preferably from 1 to 500µm.

### Surfactant Material

Liquid compositions of the invention may comprise surfactant materials. The liquid detergent compositions of the present inventin comprise surfactant materials preferably at a level of at least 1% by weight of the composition, more preferred at least 5% by weight, most preferred at least 10% by weight of the composition; and preferably at a level of at most 70% by weight, more preferably at most 40%, most preferably at most 35% by weight.

In the widest definition the surfactant material in general, may comprise one or more surfactants, and may be selected from anionic, cationic, nonionic, zwitterionic and amphoteric species, and (provided mutually compatible) mixtures thereof.

Suitable nonionic surfactants include for example aliphatic alcohols, acids, amides or alkyl phenols with alkyl oxides, especially ethylene oxide. Specific nonionic detergent compounds are alkyl (C₆-C₁₈) primary or secondary linear or branched alcohols with ethylene oxide, and products made by condensation of ethylene oxide with the reaction products of propylene oxide and ethylene-di-amine. Preferably, the level of nonionic surfactant materials is from 1 to 50 % by weight of the composition, more preferably from 2 to 30%.

Compositions of the present invention may contain synthetic anionic surfactant ingredients. Suitable anionic surfactants are usually water-soluble alkali metal salts of organic sulphates and sulphonates having alkyl radicals containing from about 8 to about 22 carbon atoms. Examples of suitable synthetic anionic surfactant compounds are sodium and potassium C8-C18 alkyl sulphates, sodium and potassium alkyl (C₉₋C₂₀) benzene sulphonates and ether variants thereof. Generally the level of the above mentioned non-soap anionic surfactant materials is from 1 to 40 % by weight of the composition, more preferred from 2 to 25%.

It is also possible, and sometimes preferred, to include an alkali metal soap of a C12-C18 carboxylic acid. Preferably the level of soap is from 1 to 35% by weight of the composition, more preferably from 5 to 25%.

Preferably, the surfactant material is present at a level of at least 1% by weight of the composition, more preferred at least 5% by weight, most preferably at least 10% by weight of the composition; and preferably at a level of at most 60% by weight, more preferably at most 50%, most preferably at most 40% by weight of the total composition.

### Electrolyte and Builder Material

Compositions according to the invention may comprise electrolyte material, some or all of which may be builder material. It is noted that for the purpose of the invention, the term electrolytes includes builder material.

Preferably, the liquid detergent compositions according to the invention comprise salting-out electrolyte having a lyotropic value of less than 9.5 and preferably less than 9.0. Salting-out electrolyte has the meaning ascribed in specification EP-A-0,079 646. Preferred salting-out electrolytes are selected from alkali metal and ammonium salts of phosphates (including pyro, ortho and poly phosphates), silicates, borates, carbonates, sulphates, citrates, NTA and succinates. Preferably, the liquid detergent compositions according to the invention contain at least 1% by weight of a salting-out electrolyte, more preferably at least 2%, most preferably at least 5% by weight and preferably at most 30% by weight, more preferably at most 20% by weight of a salting-out electrolyte. Optionally, some salting-in electrolyte (as defined in the latter specification) may also be included.

Preferably, the total level of electrolyte is from 1 to 60% by weight of the composition, more preferably from 4 to 45% by weight, most preferably from 8 to 40% by weight such as 8 to 30% by weight, for example 10 to 30% by weight.

In any event, it is preferred that compositions according to the present invention include detergency builder material, some of which may be electrolyte. In this context it should be noted that some surfactant materials such as for example soaps, also have builder properties.

Examples of phosphorous containing inorganic detergency builders include the water-soluble salts, especially alkali metalpyrophosphates, orthophosphates, polyphosphates and phosphonates. Examples of non-phosphorus-containing inorganic detergency builders, when present, include water-soluble alkali metal carbonates, bicarbonates, silicates and crystalline and amorphous aluminosilicates. Examples of organic detergency builders, when present, include the alkaline metal, ammonium and substituted ammonium polyacetates, carboxylates, polycarboxylates, polyacetyl carboxylates and polyhydroxysulphonates.

Preferably, the level of non-soap builder material is from 5 to 40% by weight of the composition, more preferred from 10 to 30% by weight of the composition.

### Deflocculating Polymers

Liquid detergent compositions preferably comprise a deflocculating polymer, e.g. as described in WO 91/06622, WO 91/06623, GB-A-2,237,813, WO 91/09109, WO 94/03575 and/or EP-A-0,346,995, US 5,494,602, EP-0-623-670, US 5, 489,397 and EP 691399 incorporated herein by reference. In general, the deflocculating polymer will be used at levels of from 0.01 to 5% by weight of the composition, more preferably from 0.1 to 3.0%, especially preferred from 0.25 to 2.0%.

### Enzymes

Compositions according to the invention may include enzymes such as protease, amylase, cellulase and lipase. Each type of enzyme is preferably present at a level of from 0.05 to 5%, more preferably, 0.1 to 3%, most preferably 0.2 to 1% by weight of the composition.

### Further Optional Ingredients

Apart from the ingredients already mentioned, a number of optional ingredients may also be present for example solvents, lather boosters, lather depressants, oxygen-releasing bleaching agents such as sodium perborate and sodium percarbonate, peracid bleach precursors, chlorine-releasing bleaching agents such as trichloroisocyanuric acid, inorganic salts such as sodium sulphate, and, usually present in very minor amounts, fluorescent agents, perfumes, enzymes such as proteases, amylases and lipases incuding lipolase (ex Novo), enzyme stabilizers, anti-redeposition agents, germicides and colorants. However it is preferred that for structured detergent compositions solvent is substantially absent.

### Product Forms

Detergent compositions according to the present invention are liquid. However, they may be used as intermediate compositions (ie. pre-dispersion or pre-solution) to produce aqueous liquids, non-aqueous liquids including detergent liquids as well as solid compositions.

Preferably the structured liquid detergent compositions of the present invention are concentrated.

The Viscosity of the liquid compositions according to the invention is preferably from 20 to 2,500 mPas, preferably 100 to 1,500 mPas, most preferably 300 to 900 mPas at 21 s-1 at 25°C. Preferably the liquid detergent compositions according to the invention have a viscosity of at least 250 mPas, and if structured of at least 500 mPas.

Liquid compositions according to the invention are physically stable, i.e. they will yield no more than 10%, preferably no more than 5 %, most preferred no more than 2% by volume phase separation as evidenced by the appearance of 2 or more separate phases when stored at 25°C for 21 days from the time of preparation.

Preferably, the pH, as provided to the wash liquor, preferably by a liquid, is at least 6, more preferably at least 6.5, most preferably at least 7. Preferably, the pH is at most 12, more preferably at most 11, more preferably at most 10.

Preferably, the structured liquid detergent compositions of the invention comprise water at levels of from 5 to 60%, more preferably from 10 to 50% by weight of the composition. Preferably, the liquids are concentrated.

### Preparation

The invention further relates to a process for preparing a liquid composition comprising a liquid carrier and a water-dispersable or water-soluble sulphonated polyester comprising:
(i) an unsulphonated aromatic diacidic monomer (A),
(ii) a sulphonated aromatic diacidic monomer (SA)
(iii) optionally a hydroxylated aromatic or aliphatic diacidic monomer (HA), in an amount replacing up to 50 mole% of (A) and/or (SA),
(iv) a polyol (P) selected from ethylene glycol, propylene glycol, isopropylene glycol, glycerol, 1,2,4-butanetriol and 1,2,3-butanetriol, and oligomers of these having from 1 to 8 monomer units,
   the polyester having a sulphur content within the range of from 0.5 to 10 wt%;
wherein the polyester is mixed with the liquid carrier.

Preferably, the liquid carrier comprises:
a) surfactants at a level of 45% by weight of higher;
b) a mixture of surfactant and water; or
c) water at a level of higher than 5% by weight.

Preferably, the liquid carrier with the polyester is heated to a temperature of above 50°C, more preferably above 70°C, in particular if the liquid composition comprises surfactant material.

### Preparation of the liquid detergent compositions

A preferred method for preparing liquid detergents which are either structured liquid detergent compositions and/or which have a pH of between 6-10, involves dispersing of the electrolyte ingredient together with the minor ingredients except for the temperature and pH sensitive ingredients, such as enzymes, perfumes, etc -if any- in water of elevated temperature, followed by the addition of the builder material -if any-, the surfactant material (possibly as a premix) under stirring and thereafter cooling the mixture and adding any pH and temperature sensitive minor ingredients, such as soil-release polyester of the present invention. The deflocculating polymer may for example be added after the electrolyte ingredient or as the final ingredient.

Surprisingly, we have found that soil-release polyesters can be stably incorporated in liquid detergent compositions, whilst remaining its soil-releasing activity, by mixing the polyester into a liquid, which is preferably structured. Preferably the polyester is the form of a solution or fine dispersion. Preferably, the polyester is added to the liquid at a temperature of below 80°C, more preferably, at a temperature below 60°C, most preferably below 40°C.

In the case of an aqueous liquid detergent compositions including structured compositions, the composition has preferably an alkaline pH, in which case the temperature of the liquid detergent composition is not raised above 60°C, more preferably 50°C after addition of the polyester composition.

Preferably, the soil-release polyester of the invention is added on top of the liquid.

The invention further relates to a process of producing a detergent composition, by using a dispersion or solution of a polyester material according to the invention in a liquid carrier.

The invention will be illustrated by way of the following non-limiting Examples:-

### EXAMPLES

Polyester 1 is a water-soluble sulphonated polyester of terephthalic acid, isophthalic acid, sulphoisophthalic acid and ethylene glycol having the following approximate composition:
- diacidic monomer comprising approximately 77 mole% terephthalate, 3.7 mole% isophthalate, 18.2 mole% sulphoisophthalate;
- ratio of OH groups ex ethylene glycol to COOH groups ex diacid monomers approximately 1.22;
- number average molecular weight, by GPC in tetrahydrofuran at 25°C with calibration against polystyrene standards, 534; weight average molecular weight 1667;
- sulphur content 2.4 wt%;
- hydroxyl group content approximately 1.4-1.5 per kg polyester.

### Example 1

A nonionic surfactant material(Dobanol 1-5) and water were mixed in a weight ratio of 4:1. 15% by weight of Polyester 1 (see description hereinabove) was dispersed in the mixture and the mixture was heated to a temperature of about 80°C, and subsequently cooled. The resulting liquid was non-translucent and pourable. Weight ratios of 9:1 and 7:3 gave similar, good results.

### Example 2

Using a 50:50 mixture of Priolene (fatty acid) and the nonionic of Example 1, instead of the sole nonionic of Example 1, in a ratio with water of 4:1 also leads non-translucent and pourable liquids with Polyester 1.

Prilolene is a trademark.

### Example 3

5% by weight of Polyester 1 was dissolved in water at room temperature to produce a clear solution.

### Example 4

10% hydrotrope was added to the mixtures of Example 1.

### Example 5

5% of Polyester 1 was added to nonionic surfactant (Dobanol 1-5) and heated to about 80°C. The resulting liquid was added to a liquid which resulted in the following composition:

| Ingredients | % by weight |
|---|---|
| Nonionic 1) | 27.9 |
| Nonionic 2) | 22.8 |
| Antifoam | 2.7 |
| Sodium Carbonate | 16.4 |
| LAS Acid | 6 |
| Calcite | 6 |
| Sipernat D17 3) | 4 |
| Versa TL 3 4) | 1.5 |
| SCMC | 1.5 |
| Fluorescer | 0.15 |
| Perborate Monohydrate | 10.5 |
| Polyester | 0.5 |

| | |
|---|---|
| 1) Vista 1012-62, ex Vista Chemical Company | |
| 2) Dobanol 25-3, ex Shell | |
| 3) Silica, ex Degussa | |
| 4) Polymer, ex National Starch and Chemical Corp. | |

Vista, Dobanol,Sipernat and Versa are trademarks.

A stable low viscosity non-aqueous liquid was obtained. Addition of low levels of water to the initial polyester dispersion leads to similar results.

### Example 6

The liquid of Example 3 was added into a commercially available liquid detergent composition with stirring. The resulting liquid was stable and showed excellent soil-release activity.

The liquids of Example 1 may be used in the preparation of solid detergent compositions.

### Example 7

The following structured liquid was prepared:

| Ingredients | Formulation % & by weight |
|---|---|
| Anionic | 16.5 |
| Nonionic | 9 |
| Soap | 4.5 |
| Polymer* | 1 |
| Citrate | 8 |
| Zeolite | 15 |
| Minors, Alkali and Water | ad 100 |

| | |
|---|---|
| * Polymer All of EP 346, 995 | |
| The liquid has a pH of 8.5. | |

### Washing method:

Polyester swatches were prewashed two times with the above formulation with and without polyester 1. The dosage of the above formulation was 6 g/l, the washing time was 30 minutes at T=40°C. Thereafter, the swatches were contaminated with 70µl n-heptane solution of oily soil components of which the conc was approximately 20mg/ml and washed. The liquid/cloth ratio in the wash liquor was 20:1, the temperature of the wash liquor was. 40°C and the washing time 15 min. Thereafter, the swatches were dried and extracted with THF, whereafter the soil-removal was determined using two internal standards and gas chromotographic analysis.

The following results were obtained:

| Formulation | % soil-removal removal |
|---|---|
| - without polyester 1 | 36% |
| - with polyester 1 | 61% |

It can be concluded that the soil-release polyesters according to the invention provide excellent soil release effects.

### Example 8

The following structured liquid according to the invention was prepared by adding polyester 1 in a nonionic predispersion on top of the liquid at ambient temperature:

| Ingredients | % by weight |
|---|---|
| LAS | 28 |
| Nonionic | 12 |
| Citrate | 10 |
| Glycerol/Borax | 7.7 |
| Monoethanolamine | 2 |
| Triethanolamine | 2 |
| Polymer * | 1 |
| Minors | 2.3 |
| Water | to 100 |
| Polyester | 0.5 |

| | |
|---|---|
| * Polymer All of EP 346,995 | |
| The pH of the liquid is 9.8. | |

### Example 9

The following structured liquid according to the invention was prepared by adding polyester 1 in a nonionic predispersion on top of the liquid at ambient temperature:

| Ingredients | % by weight |
|---|---|
| NaLAS | 23 |
| Nonionic | 9 |
| Alkyl EO sulphate | 2 |
| NTA | 11 |
| Polymer * | 1 |
| Prop. Glycol/Borax | 9.5 |
| MEA | 1 |
| Enzymes | 1.5 |
| Water | to 100 |
| Polyester | 0.5 |

| | |
|---|---|
| * Polymer All of EP 346,995 | |
| The pH of the liquid is about 9.5. | |

### Example 10

The following structured liquid according to the invention was prepared by adding polyester 1 in a nonionic predispersion on top of the liquid at ambient temperature:

| Ingredients | % by weight |
|---|---|
| Nonionic | 10.5 |
| Dobanic | 12.25 |
| Fatty acid | 7.4 |
| Caustic | 6.8 |
| Citric acid | 6 |
| Glycerol/Borax | 8.5 |
| Polymer * | 0.75 |
| Minors | 0.9 |
| Water | to 100 |
| Polyester | 0.5 |

| | |
|---|---|
| * Polymer All of EP 346,995 | |
| The pH of the liquid is 8.5. | |

### Example 11

The following structured liquid according to the invention was prepared by adding polyester 1 in a nonionic predispersion on top of the liquid at ambient temperature:

| Ingredients | % by weight |
|---|---|
| Primary Alkyl Sulphate | 14 |
| Nonionic | 18 |
| Soap | 10 |
| Caustic | 5.1 |
| Borax/Glycerol | 8.5 |
| Polymer * | 1.0 |
| Citric Acid | 5.5 |
| PVP | 0.2 |
| Minors | 1.6 |
| Water | to 100 |
| Polyester | 0.5 |

| | |
|---|---|
| * Polymer All of EP 346,995 | |
| The pH of the liquid is about 8.5. | |

### Example 12

The following structured liquid according to the invention was prepared by adding polyester 1 in a nonionic predispersion on top of the liquid at ambient temperature:

| Ingredients | % by weight |
|---|---|
| LAS acid | 7.6 |
| Nonionic 7EO | 2 |
| STPP | 21 |
| Caustic | 0.7 |
| Glycerol/Borax | 7.2 |
| Minors | 0.8 |
| Water | to 100 |
| Polyester | 0.5 |
| The pH of the liquids is about 8.5. | |

### Example 13

The following structured liquid according to the invention was prepared by adding polyester 1 in a nonionic predispersion on top of the liquid at ambient temperature:

| Ingredients | % by weight |
|---|---|
| LAS acid | 6.7 |
| Nonionic 7&3 EO | 4.8 |
| Zeolite 4A | 20 |
| Citric acid | 2.5 |
| Minors | 2.7 |
| Antifoam | 0.2 |
| Caustic | 1.4 |
| Glycerol/Borax | 7.2 |
| Water | to 100 |
| Polyester | 0.5 |
| The pH of the liquid is about 8.5-9. | |

### Example 14

The following structured liquid according to the invention was prepared by adding polyester 1 in a nonionic predispersion on top of the liquid at ambient temperature:

| Ingredients | % by weight |
|---|---|
| LAS | 22.4 |
| Alkyl EO Sulphate | 5.6 |
| STPP | 20 |
| Alkali | 12 |
| Polymer * | 1 |
| Minors | 1.2 |
| Water | to 100 |
| Polyester | 0.5 |

| | |
|---|---|
| * Polymer All of EP 346,995 | |

### Example 15

The following structured liquid according to the invention was prepared by adding polyester 1 in a nonionic predispersion on top of the liquid at ambient temperature:

| Ingredients | % by weight |
|---|---|
| LAS | 24 |
| Alkyl EO sulphate | 6 |
| STP | 22 |
| Citric acid | 2 |
| Glycerol/Borax | 4.1 |
| Polymer * | 1 |
| Minors | 1.5 |
| Caustic | 6 |
| Water | to 100 |
| Polyester | 0.5 |

| | |
|---|---|
| * Polymer All of EP 346,995 | |
| The pH of the liquid is about 7.5-8.0. | |

### Example 16

The following structured liquid according to the invention was prepared by adding polyester 1 in a nonionic predispersion on top of the liquid at ambient temperature:

| Ingredients | % by weight |
|---|---|
| LAS | 22 |
| Alkyl EO sulphate | 5.6 |
| Zeolite | 16 |
| Potassium Sulphate | 3 |
| Citric acid | 9 |
| Glycerol/Borax | 5 |
| Polymer * | 1 |
| Minors | 1 |
| Caustic | 6 |
| Water | to 100 |
| Polyester | 0.5 |
| The pH of the liquid is about 8-8.5. | |

| | |
|---|---|
| * Polymer All of EP 346, 995 | |

### Example 17

The following structured liquid according to the invention was prepared by adding polyester 1 in a nonionic predispersion on top of the liquid at ambient temperature:

| Ingredients | % by weight |
|---|---|
| LAS acid | 6.25 |
| Nonionic | 26.6 |
| Span 20 | 2.0 |
| Caustic | 6.5 |
| Citric acid | 7.0 |
| Glycerol/Borax | 7 |
| Zeolite 4A | 18.0 |
| Polymer * | 1.5 |
| Minors | 1.3 |
| Water | to 100 |
| Polyester | 0.5 |

| | |
|---|---|
| * Polymer All of EP 346,995 | |
| The pH of the liquid is 7.5-8.5. | |

## Claims

1. A liquid composition characterised in that the liquid composition comprises a water-dispersable or water-soluble sulphonated polyester comprising
(i) an unsulphonated aromatic diacidic monomer (A),
(ii) a sulphonated aromatic diacidic monomer (SA)
(iii) optionally a hydroxylated aromatic or aliphatic diacidic monomer (HA), in an amount replacing up to 50 mole% of (A) and/or (SA),
(iv) a polyol (P) selected from ethylene glycol, propylene glycol, isopropylene glycol, glycerol, 1,2,4-butanetriol and 1,2,3-butanetriol, and oligomers of these having from 1 to 8 monomer units,
the polyester having a sulphur content within the range of from 0.5 to 10 wt%;
and a liquid carrier comprising:
a) surfactants at a level of 45% by weight of higher;
b) a mixture of surfactant and water; or
c) water at a level of higher than 5% by weight.

2. A liquid composition according to claim 1 wherein the liquid composition is a liquid detergent composition, preferably a liquid detergent composition which has a structure.

3. A liquid composition according to any one of claims 1 or 2 wherein the liquid composition has a pH of from 6 to 10.

4. A liquid composition according to any one of claims 2 or 3 comprising electrolytes, preferably salting out electrolyte.

5. A composition according to any one of claims 1 to 4, wherein the liquid has a viscosity of up to 2,500 mPas at 21 s⁻¹.

6. A composition according to claim 1, further comprising from 5-50% by weight of hydrotrope material.

7. A composition according to any one of claims 1 to 6, comprising surfactant material at a level of from 45 to 100% by weight of the composition, or 1 to 60% by weight of the composition.

8. A composition according to any one of claims 1 to 7, wherein the polyester is present in dissolved form or is dispersed.

9. A process for preparing a liquid composition comprising a water-dispersable or water-soluble sulphonated polyester comprising
(i) an unsulphonated aromatic diacidic monomer (A),
(ii) a sulphonated aromatic diacidic monomer (SA)
(iii) optionally a hydroxylated aromatic or aliphatic diacidic monomer (HA), in an amount replacing up to 50 mole% of (A) and/or (SA),
(iv) a polyol (P) selected from ethylene glycol, propylene glycol, isopropylene glycol, glycerol, 1,2,4-butanetriol and 1,2,3-butanetriol, and oligomers of these having from 1 to 8 monomer units,
the polyester having a sulphur content within the range of from 0.5 to 10 wt%;
and a liquid carrier comprising
a) surfactants at a level of 45% by weight of higher;
b) a mixture of surfactant and water; or
c) water at a level of higher than 5% by weight.
wherein the polyester is mixed with the liquid carrier.

10. A process according to claim 9, wherein the liquid composition is a liquid detergent composition, preferably a liquid detergent composition which has a structure.

11. A process according to any one of claims 9 or 10 wherein the liquid carrier has a pH of between 6 and 10.

12. A process according to any one of claims 9 to 11 wherein the polyester is added to liquid at a temperature of below 80°.

13. A process according to any one of claims 9 to 12, wherein the liquid carrier with the polyester is heated to a temperature of above 50°C.

14. A process according to any one of claims 9 to 13 wherein the polyester is added in the form of a solution or in the form of a dispersion.
